# EUROPEAN PATENT APPLICATION

(11) **EP 1 061 441 A2**
(43) Date of publication of application: **20.12.2000**
(21) Application number: 00304965.7
(22) Date of filing: 13.06.2000
(51) Int. Cl.: G06F 9/44

(54) **Common information model objects for an object-based java computing environment**

(30) Priority: 14.06.1999 US 139239; 14.06.1999 US 333878; 05.05.2000 US 566775
(71) Applicant: SUN MICROSYSTEMS, INC., Palo Alto, California 94303 (US)
(72) Inventor: Davis, James D., Pepperell, MA 01463 (US); Johnson, Thomas V., Burlington, MA 01803 (US)
(74) Representative: Browne, Robin Forsythe, Dr.

(57) **Abstract**

Methods and apparatus for mapping of a common information model (CIM) object into a Java™-based environment. According to one aspect of the present invention, a for mapping a CIM object into a platform-independent computing environment includes providing the platform-independent computing environment with a first class structure that includes CIM-specific classes, and providing the platform-independent computing environment with the capability to support unsigned integers. In one embodiment, the CIM-specific classes include classes derived from a base class for managed system elements.

## Description

### CROSS REFERENCE TO RELATED APPLICATION

The present invention claims priority of provisional U.S. Patent Application No. 60/139,239, filed June 14, 1999, which is incorporated herein by reference in its entirety.

### BACKGROUND OF THE INVENTION

### 1. Field of Invention

The present invention relates generally to object-based computing systems. More particularly, the present invention relates to Common Information Model (CIM) object models for use in object-based Java™ computing environments.

### 2. Description of the Related Art

In order to facilitate the sharing of resources between various networked computer systems, object-oriented methodologies are often implemented. Object-oriented methodologies may be used to effectively "define" parts of a networked environment. The Common Information Model (CIM) is an object-oriented framework which may be used to classify as well as define parts of a networked environment. CIM may also be used to effectively "depict" how parts of a networked environment integrate together. In general, CIM is considered as an approach to the management of systems and networks, as will be appreciated by those skilled in the art.

CIM categorizes information from general levels to specific levels which extend the overall model, *i.e.*, CIM "model." Typically, CIM includes three layers of information, namely a core model layer, a common model layer, and an extension layer. Together, the core model layer and the common model layer are known as the CIM schema. The core model layer is a subset of CIM which is not specific to any particular platform or environment. The common model is an information model that visually depicts concepts, functionalities, and representations of entities related to various areas of network management. Various areas of network management include, but are not limited to, the management of systems, devices, and applications. The extension layer includes information models that support the CIM schema, and represent specific platforms and protocols.

In general, the core model of CIM provides underlying, generalized assumptions relating to a managed environment, *e.g.*, computer systems, applications, or networks. Such assumptions may include, for example, an assumption that data must be contained in a known location and distributed accordingly to applications or users that request the data. The assumptions are formulated as sets of classes and associations that effectively form the basis of the managed environment. In other words, the core model provides classes, associations, and properties that may be used to describe managed systems and to determine how to extend the common model.

The common model effectively depicts areas of network management that are independent of specific technology or implementation, *i.e.*, areas that are platform-independent. Further, the common model provides a basis for the development of management applications. A set of base classes that may be used for extending CIM into schemas such as a systems schema, a devices schema, an applications schema, a networks schema, and a physical schema. Elements within CIM are typically defined in a Managed Object Format (MOF) language. The MOF language specifies a syntax that may be used to define CIM classes and syntaxes.

Extensions or, more specifically, extension schemas, are generally built into CIM in order to connect specific technologies into a CIM model. By extending CIM, a specific operating environment may be made available to a variety of users and administrators. Extension schemas enable classes to be provided such that applications that manage and administer extended technology may be built.

While CIM may be implemented on some platforms, CIM is not arranged to be implemented on platforms associated with the Java™ programming language developed by Sun Microsystems, Inc., of Palo Alto, California. One example of a Java™ environment, or an environment created using the Java™ programming language, is the Solaris™ operating system developed by Sun Microsystems, Inc. The Solaris™ operating system is suitable for implementing Web-Based Enterprise Management (WBEM). WBEM provides a way for management applications to share management data independently of vendor, protocol, operating system, or management standards.

As the use of the Java™ programming language is growing due, at least in part, to its platform-independent properties, many object-oriented programming environments are created using the Java™ programming language and, hence, are effectively Java™ environments. The use of CIM as an approach to managing systems and networks is also growing, as CIM enables efficient communication using managed objects to access data. However, as CIM is not arranged to be used with respect to a Java™ environment, managing systems and networks associated with a Java™ environment is often not efficiently achieved, as less-efficient object-oriented technologies, such as the Common Object Request Broker Architecture (CORBA), must generally be used with a Java™ environment.

Therefore, what is desired is an efficient approach to managing systems and networks using a platform-independent environment. That is, what is needed is a method and an apparatus for mapping CIM objects into a platform-independent environment such as a Java™ environment.

### SUMMARY OF THE INVENTION

The present invention relates to the mapping of a common information model (CIM) object into a Java™-based environment. According to one aspect of the present invention, a method for mapping a CIM object into a platform-independent computing environment includes providing the platform-independent computing environment with a first class structure that includes CIM-specific classes, and providing the platform-independent computing environment with the capability to support unsigned integers. In one embodiment, the CIM-specific classes include classes derived from a base class for managed system elements.

In another embodiment, the method also includes creating a CIM object in the platform-independent computing environment using the CIM-specific classes. In such an embodiment, the CIM object in the platform-independent computing environment includes a property, and the method further includes obtaining the property from the CIM object using a non-introspective operation.

According to another aspect of the present invention, a platform-independent computing environment includes a processor and a mapping mechanism. The mapping mechanism is used for mapping a CIM object into an object model that is suitable for use in the platform-independent computing environment. In one embodiment, the platform-independent computing environment is a Java™-based environment, and the platform-independent computing environment further has the capability to support unsigned integers.

According to still another aspect of the present invention, a class hierarchy within a Java™ computing environment includes at least one class associated with a CIM object model. The class hierarchy includes an object class that is associated with the Java™ computing environment, as well as a class which is associated with managed system elements. The class which is associated with the managed system elements is arranged to inherit from the object class. The class hierarchy also includes a numbers class associated with the Java™ computing environment in addition to at least one class which is associated with the implementation of unsigned integers. Any class which is associated with the implementation of the unsigned integers is arranged to inherit from the number class.

In one embodiment, the class hierarchy also includes a class which is associated with a CIM date and time representation. Such a class is arranged to inherit from the object class. In such an embodiment, the class hierarchy may further include a class which is associated with a CIM data type representation and inherits from the object class, as well as at least one CIM-specific class which is arranged to inherit from the class which is associated with the managed system elements.

These and other advantages of the present invention will become apparent upon reading the following detailed descriptions and studying the various figures of the drawings.

### BRIEF DESCRIPTION OF THE DRAWINGS

The present invention may best be understood by reference to the following description taken in conjunction with the accompanying drawings in which:
Fig. 1 is a diagrammatic representation of the classes associated with mapping Common Information Model (CIM) objects into a Java™ computing environment in accordance with an embodiment of the present invention.
Fig. 2 is a diagrammatic representation of a CIM object that is suitable for use in a Java™ computing environment in accordance with an embodiment of the present invention.
Fig. 3 is a meta schema structure diagram of a CIM object that is suitable for use in a Java™ computing environment in accordance with an embodiment of the present invention.
Fig. 4 is a diagrammatic representation of an inheritance structure in accordance with an embodiment of the present invention.
Fig. 5 is a diagrammatic representation of a general-purpose computer system suitable for implementing the present invention

### DETAILED DESCRIPTION OF THE EMBODIMENTS

Many object-oriented programming environments are created using the Java™ programming language developed by Sun Microsystems, Inc., of Palo Alto, California. The use of the Java™ programming language to create Java™ environments which may be used, for example, to manage systems and networks, enables the systems and networks to be managed in a substantially platform-independent manner. The platform-independence enables a network, which includes computing systems of different platforms, to be managed using substantially any of the networked computing systems. The Common Object Model (CIM) is an approach to managing systems and networks that allows for efficient communication using managed objects to access data. CIM, however, is not arranged to be used with respect to a Java™ computing environment. Therefore, managing systems and networks associated with a Java™ environment, such as a Solaris™ environment developed by Sun Microsystems, is often not efficiently achieved.

By mapping CIM objects into a Java™ environment, the efficient communication afforded by CIM may be combined with the platform-independence of the Java™ programming language. Since elements of CIM are defined using the Managed Object Format (MOF) language, and the MOF language may be converted into the Java™ programming language, an application that uses CIM elements may be converted such that the application may be used on substantially any system or environment that supports the Java™ programming language.

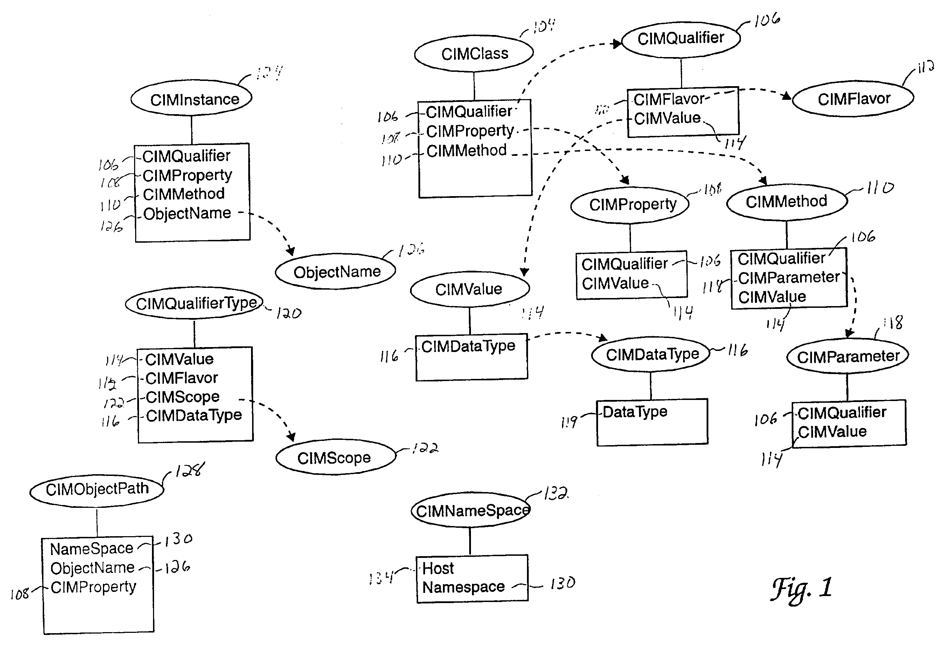

Mapping CIM objects into a Java™ environment includes the creation of CIM-specific classes which are not a standard part of a Java™ environment, such as a Solaris™ operating system, that is suitable for Web-Based Enterprise Management (WBEM). Fig. 1 is a diagrammatic representation of the classes associated with mapping CIM objects into a Java™ computing environment in accordance with an embodiment of the present invention. That is, Fig. 1 is a diagrammatic representation of the CIM-specific classes, as well as the interrelations between classes, which are typically necessary to enable a CIM object to be modeled in a Java™ environment. A CIMClass class 104 supports a CIMQualifier class 106, a CIMProperty class 108, and a CIMMethod class 110. CIMClass 104 is a CIM class or an object that represents a collection of CIM instances which support a common type, *e.g.*, a set of properties or methods. An instance of CIMClass 104 defines an interface that creates a template for filling in required CIM values for an object that is being created.

An instance of CIMQualifier 106 is a modifier that describes a class, instance, method, or property, and supports a CIMFlavor class 112 and a CIMValue class 114. Generally, an instance of CIMQualifier 106 may be used to modify an attribute of a managed object. In the described embodiment, instances of CIMQualifier 106 may effectively be divided into two categories, namely qualifiers defined by CIM and qualifiers defined by developers. As will be appreciated by those skilled in the art, a qualifier is an example of a modifier that describes a class, instance, property, method, or parameter.

An instance of CIMProperty 108 is a value that characterizes an instance of a CIM class. Properties may be arranged as a pair of functions that set a property value and return a property value. Specifically, a property is a name and a domain that describes a unit of data for a class. The domain may either be a class that owns a particular property, or a value. In one embodiment, a property value has a managed object format as a data type.

CIMMethod 110 creates and instantiates a CIM method. An instance of CIMMethod 110 defines declarations that contain the names of methods, return types, and parameters associated with the methods, supports instances of CIMQualifier 106, a CIMParameter class 118, and CIMValue 114. CIMParameter 118 is associated with a CIM parameter class such that an instance of CIMParameter 118 has a value that is passed to a method, *e.g.*, a CIM method, from a calling method.

CIMFlavor 112 is a CIM qualifier flavor, or a characteristic of a qualifier. CIMFlavor 112 describes rules that specify whether a qualifier may be propagated to derived classes and instances. An instance of CIMFlavor 112 may also specify whether a derived class or instance may override the original value of a qualifier. In general, a flavor is part of a qualifier that indicates overriding and inheritance rules.

CIMValue 114 is a CIM value, *e.g.*, a class derived from a CIM value class, which is a value that may be assigned to properties, references, and qualifiers. In other words, CIMValue 114 encapsulates substantially any CIM value to which properties, references, and qualifiers may be assigned. A CIMDataType class 116 is supported by CIMValue 114. Specifically, an instance of a CIM value 114 has an actual value, or values, and a CIMDataType 116. CIMDataType 116 supports data types 119 as defined within the Common Information Model Specification, Version 2.2, published by Distributed Management Task Force, Inc., on June 14, 1999, which is incorporated herein by reference in its entirety. Such data types 119 include, but are not limited to, strings, signed integers, and unsigned integers. For example, CIMDataType 116 may use an unsigned integer class to instantiate valid data types 119.

In order to obtain an instance of CIMQualifier 106, an instance of CIMQualifierType 120 generally required. That is, CIMQualifierType 120, which includes CIM qualifier types, is a template that is used for creating CIM qualifiers. CIMQualifierType 120 supports CIMValue 114, CIMFlavor 112, CIMDataType 116, and a CIMScope 122. An instance of CIMScope 122 is a CIM scope, which is a qualifier attribute that indicates the CIM objects with which a given qualifier may be used. In one embodiment, when a particular qualifier attribute has a scope specified as "Scope(Class Association Indication)", the implication is that the particular qualifier attribute may substantially only be used with classes, associations, and indications.

A CIMInstance 124 creates and instantiates a CIM instance, which is typically a set of property values which may be uniquely identified using a key. A key, in one embodiment, is a unique identifier for any instance of a class. By way of example, in a CIM environement, a key for a given class may include properties which are designated as keys. In general, the concatenation of the values of key properties associated with a class results in a unique identifier for any instance of the class.

CIMInstance 123 interface is effectively a unit of data, *e.g.*, instances of CIMInstance 124 contain actual data. Such an interface may be used to describe a managed environment. CIMInstance 124 supports CIMQualifier 106, CIMProperty 108, and CIMMethod 110, and an ObjectName 126, which describes the name of a particular object. In the described embodiment, ObjectName 126 includes an object path or a model path that uniquely identifies an object in a namespace. It should be understood that an object path is typically a formatted string of characters that is used to access name spaces, classes, and instances.

An instance of a CIMObjectPath 128 is a path name for a CIM object, and supports a NameSpace 130, ObjectName 126, and CIMProperty 108. NameSpace 130, as will be appreciated by those skilled in the art, is a unit that is used to group classes and instances such that the scope and visibility of the classes and instances may be controlled. In general, name spaces are logical databases that contain specific classes and instances.

A CIMNameSpace 132, or an instance of a CIMNameSpace 132, supports a host 134 and a NameSpace 130. In general, CIMNameSpace 132 creates and instantiates a CIM namespace, which is a directory-like structure that may include, but is not limited to, namespaces, classes, instances, qualifier types, and qualifiers. A CIM namespace is typically an object that defines a scope within which object keys are unique, and provides a grouping of CIM classes and CIM instances that represent managed objects in a particular environment. CIMNameSpace 132 is used to refer to an implementation that provides a domain in which class instances are unique. In one embodiment, CIMNameSpace 132 is used to instantiate NameSpace 130, which is included, along with a model path, in the name of a CIM object.

The classes described with respect to Fig. 1 are arranged to provide a non-introspective mapping from CIM into a Java(T))-environment. As will be understood by those skilled in the art, introspective mapping typically involves looking into an object to determine the properties, for instance, that are associated with the object. Non-introspective mapping, however, effectively enables properties associated with objects of a class to be identified by querying the class. By way of example, a getProperties method may be used to obtain a list of properties associated with a CIMClass.

As previously mentioned, a "regular" Java™ object, or a typical object which is suitable for use in a Java™ environment, is not representative of a CIM object that is suitable for use in a Java™ environment. Essentially, a CIM object that is suitable for use in a Java™ environment, *e.g.*, a "Java™ CIM object," includes the functionality of a regular Java™ object. However, a Java™ CIM object includes additional characteristics and functionality that is not found in a regular Java™ object, as will be discussed below.

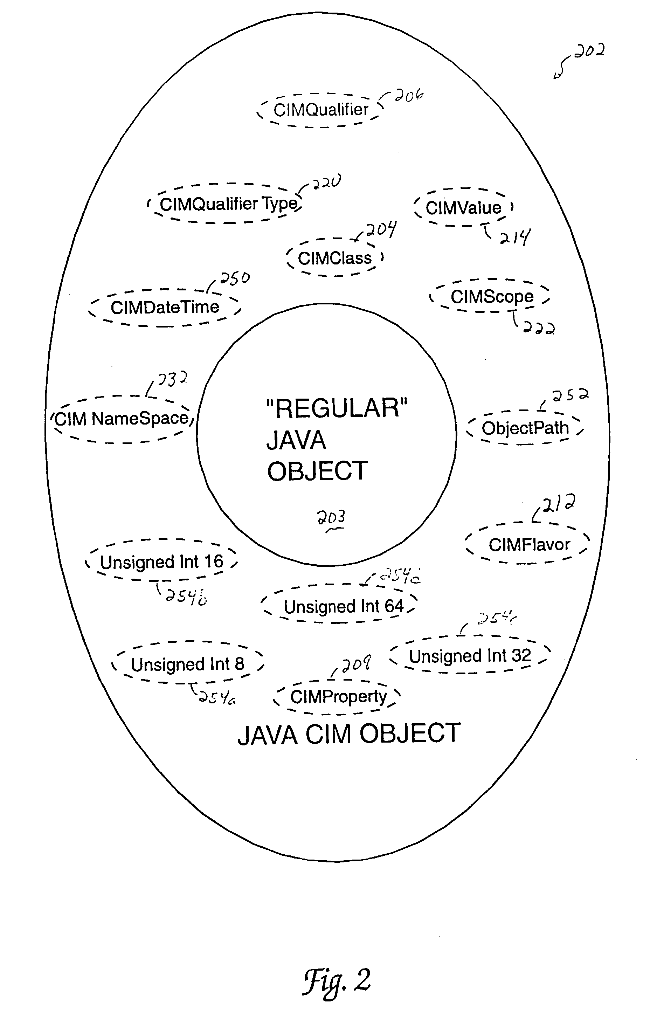

With reference to Fig. 2, one example of a Java™ CIM object will be described in accordance with an embodiment of the present invention. A Java™ CIM object 202, or an object that is suitable for use in a Java™ Environment such as the Solaris™ WBEM Services environment, includes the functionality of a regular Java™ object 203. In addition, Java™ CIM object 202 includes various attributes, properties, and definitions necessary to enable Java™ CIM object 202 to be used in a Java™ environment.

Java™ CIM object 202 includes instances of many classes and interfaces described above with respect to Fig. 1. For instance, Java™ CIM object 202 includes a CIM Qualifier 206, a CIM class 204, a CIMProperty 208, a CIMQualifierType 220, a CIMValue 214, a CIMScope 222, a CIMFlavor 212, and a CIMNameSpace 232. Java™ CIM object 202 also includes a CIMDateTime 250 which is a CIM date and time representation. CIMDateTime 250 is included in Java™ CIM object 202 due, at least in part, to the fact that CIM objects use different date and time representations than conventional Java™ objects. An ObjectPath 252 which is included as a part of Java™ CIM object 202 is a formatted string that is used to access namespaces, classes, and instances.

Java™ environments and Java™ objects typically are not arranged to support unsigned integers. However, CIM objects support and use unsigned integers. Accordingly, to enable Java™ CIM object 202 to support unsigned integers, unsigned integer interfaces 254 are included as a part of Java™ CIM object 202. Unsigned integer interfaces 254 are generally arranged to create and instantiate unsigned integer objects. Specifically, Java™ CIM object 202 includes an UnsignedInt8 interface 254a which supports unsigned 8-bit integers, an UnsignedInt16 interface 254b which supports unsigned 16-bit integers, an UnsignedInt32 interface 254c which supports unsigned 32-bit integers, and an UnsignedInt64 interface 254d which supports unsigned 64-bit integers.

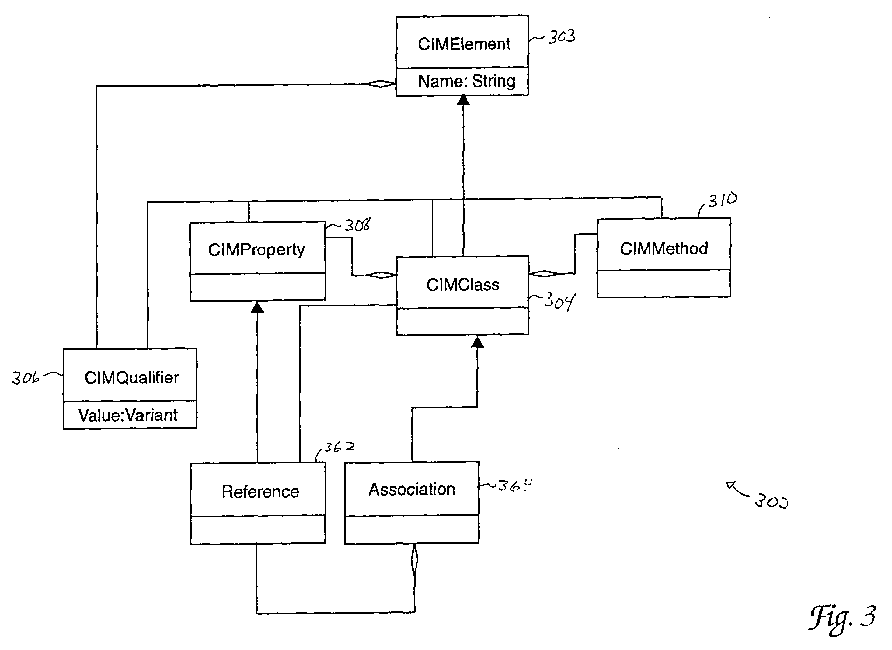

Referring next to Fig. 3, a meta schema structure of a CIM object that may be used in a Java™ environment will be described in accordance with an embodiment of the present invention. A meta schema may be considered to be a definition of a model or, more specifically, the terms used to express a model. It should be understood that the notation used in Fig. 3 is notation defined by the Unified Modeling Language (UML) which is often used to denote object-oriented concepts. A meta structure diagram 302 includes a CIMElement 303 which is a CIM element, *i.e.*, CIMElement 303 is effectively a base class for managed system elements. Specifically, CIMElement 303 is arranged to create and to instantiate a CIM element. CIMElement 303 typically includes a name, an identifier, and methods. Although the included methods may vary, the methods typically include a GetName method, a SetName method, and an Equals method.

A CIMQualifier 306 may characterize CIMElement 303, and inherits from CIMElement 303. In general, CIMQualifier 306, a CIMClass 304, and a Schema 360 all inherit from CIMElement 303. CIMClass 304 has an association with a CIMMethod 310, *e.g.*, CIMClass 304 may include at least one CIMMethod 310, such that CIMMethod 310 represents some behavior that is relevant to CIMClass 304. Specifically, CIMClass 304 is typically an aggregation of CIMMethods 310. In one embodiment, CIMMethod 310 may describe an implementation of CIMClass 304. CIMClass 304 further has an association with a CIMProperty 308 such that CIMClass 304 is effectively an aggregation of CIMProperties 308. Typically, CIMProperty 308 has a value that may be used to characterize instances of CIMClass 304. Schema 360 has an association with CIMElement 303 such that Schema 360 is associated with more than one CIMElement 303. In other words, Schema 360, which is used for overall administrative purposes, is an aggregation of CIMElements 303.

A Reference 362 is a subclass of CIMProperty 308, and typically defines roles objects play in an Association 364. That is, Association 364 is an aggregation of References 362, *i.e.*, Association 364 is a class which contains two or more References 362, and represents relationships between objects. As shown, Association 364 is a subclass of CIMClass 304. Association 364 may not be a subclass of a non-association class, although Association 364 may establish a relationship between classes without having an affect on other related classes. Reference 362 represents a role name of a class in the context of Association 364.

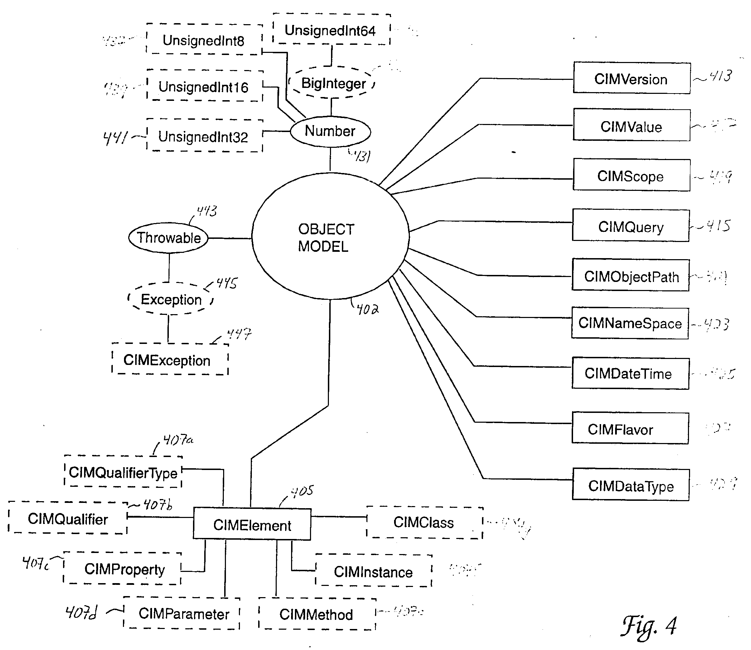

The classes associated with a Java™ CIM object, *e.g.*, Java™ CIM object 202 of Figure 2, have a class hierarchy such that some classes inherit from other. In general, some classes defined for a Java™ CIM object inherit from other classes defined for a Java™ CIM object. Other classes defined for a Java™ CIM object inherit from classes which are not specific to a Java™ CIM object, *e.g.*, general Java™ classes. Fig. 4 is a diagrammatic representation of an inheritance structure for an object model in accordance with an embodiment of the present invention. Classes included in Fig. 4 which are not shown in Fig. 1 represent classes which are CIM-specific in a Java™ environment, but are generally not necessary to map a CIM object into a Java™ environment.

As shown in Fig. 4, a Java™ CIM object model 402 that is arranged to map CIM into a Java™ environment includes a CIMElement 405 class from which various CIM-specific Java™ classes 407 inherit. CIM-specific Java™ classes 407 which inherit from CIMElement 405, or are substantially direct subclasses of CIMElement 405, include a CIMQualifierType 407a, CIMQualifier 407b, CIMProperty 407c, CIMParameter 407d, CIMMethod 407e, CIMInstance 407f, and CIMClass 407g.

A CIMVersion class 413 is a class that is intended to provide details associated with a particular version associated with a CIM object. By way of example, methods associated with CIMversion class 413 are arranged to provide version information. Such methods may include, but are not limited to, a getBuildDate method which is arranged to retrieve a date, a getCopyright method which is arranged to retrieve copyright information, and a getVersion method which is arranged to obtain a number or a string which identifies a version.

A CIMQuery class 415, which is arranged to create and instantiate a CIM query, may be included in one embodiment, although it should be appreciated that queries may generally be created and instantiated by a variety of different classes. A CIM query typically specifies filters, *e.g.*, filters for indication specification. A CIM query also specifies filters for the retrieval of CIM elements from an overall CIM object manager. A CIM object manager routes data about objects and events between different components in an environment. In other words, the CIM object manager is typically responsible for the communications between applications, a CIM repository, and object providers. Other classes included in object model 402 are a CIMValue class 417, a CIMScope class 419, a CIMObjectPath class 421, a CIMNameSpace class 423, a CIMDateTime class 425, a CIMFlavor class 427, and a CIMDataType class 429.

In the described embodiment, a Number class 431, which is not a CIM-specific class, is used to create and to instantiate various numbers, *e.g.*, integers. A BigInteger class 433 inherits from, or is a subclass of, Number class 431. BigInteger class 433 creates and instantiates relatively large integers, as for example 64-bit integers. An UnsignedInt64 class 435 inherits from BigInteger class 433 and, hence, Number class 431. As discussed above with respect to Fig. 2, a conventional Java™ environment or, more specifically, a regular Java™ object, does not support the use of unsigned integers. Hence, object model 402 has associated unsigned integer classes which are created for use in a Java™ CIM environment. Accordingly, an UnsignedInt8 class 437, an UnsignedInt16 class 439, and an UnsignedInt32 class 441 inherit from Number class 431.

Object model 402 is associated with a Throwable class 443 from which an Exception class 445 inherits. Both Throwable class 443 and Exception class 445 are standard classes in a Java™ environment. A CIMException class 447 is subclass of Exception class 445 and, hence, inherits from Exception class 445. CIMException 447 is effectively a superclass of classes that are used to represent exceptional CIM conditions in a Java™ CIM environment. Such classes may include, but are not limited to, exceptional CIM conditions associated with providers, repositories, security, semantics, and transports. Often, exceptions are recoverable and, hence, are declared in a "throws" clause of a method and caught using "try-catch" statements. Therefore, a method in a Java™ environment which throws an instance of CIMException 447 may declare the instance of CIMException 447 in its throws clause.

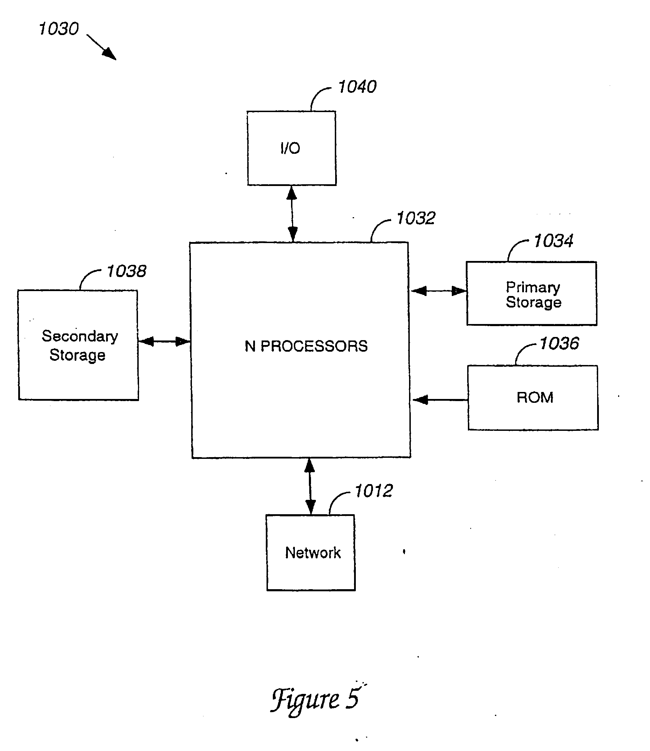

The Java™ CIM object classes, as well as standard CIM object classes, may be defined on a computer system such that Java™ CIM objects may be created using the classes on the computer system. In other words, the Java™ CIM object model may be defined or implemented on substantially any suitable computer system. Figure 5 illustrates a typical, general purpose computer system suitable for implementing the present invention. The computer system 1030 includes any number of processors 1032 (also referred to as central processing units, or CPUs) that are coupled to memory devices including primary storage devices 1034 (typically a random access memory, or RAM) and primary storage devices 1036 (typically a read only memory, or ROM).

Computer system 1030 or, more specifically, CPU 1032, may be arranged to support a virtual machine, as will be appreciated by those skilled in the art. As is well known in the art, ROM acts to transfer data and instructions uni-directionally to the CPU 1032, while RAM is used typically to transfer data and instructions in a bi-directional manner. CPU 1032 may generally include any number of processors. Both primary storage devices 1034, 1036 may include any suitable computer-readable media. A secondary storage medium 1038, which is typically a mass memory device, is also coupled bi-directionally to CPU 1032 and provides additional data storage capacity. The mass memory device 1038 is a computer-readable medium that may be used to store programs including computer code, data, and the like. Typically, mass memory device 1038 is a storage medium such as a hard disk or a tape which is generally slower than primary storage devices 1034, 1036. Mass memory storage device 1038 may take the form of a magnetic or paper tape reader or some other well-known device. It will be appreciated that the information retained within the mass memory device 1038, may, in appropriate cases, be incorporated in standard fashion as part of RAM 1036 as virtual memory. A specific primary storage device 1034 such as a CD-ROM may also pass data uni-directionally to the CPU 1032.

CPU 1032 is also coupled to one or more input/output devices 1040 that may include, but are not limited to, devices such as video monitors, track balls, mice, keyboards, microphones, touch-sensitive displays, transducer card readers, magnetic or paper tape readers, tablets, styluses, voice or handwriting recognizers, or other well-known input devices such as, of course, other computers. Finally, CPU 1032 optionally may be coupled to a computer or telecommunications network, *e.g.*, a local area network, an internet network or an intranet network, using a network connection as shown generally at 1012. With such a network connection, it is contemplated that the CPU 1032 might receive information from the network, or might output information to the network in the course of performing the above-described method steps. Such information, which is often represented as a sequence of instructions to be executed using CPU 1032, may be received from and outputted to the network, for example, in the form of a computer data signal embodied in a carrier wave. The above-described devices and materials will be familiar to those of skill in the computer hardware and software arts.

Although only a few embodiments of the present invention have been described, it should be understood that the present invention may be embodied in many other specific forms without departing from the spirit or the scope of the invention. By way of example, the names of CIM-specific classes which enable a CIM object to be modeled in a Java™ environment may vary. Further, CIM-specific classes may be modified, added, and removed from the object model as required by an overall system.

The Java™ CIM object model allows for a non-introspective mapping from a CIM environment into a Java™ environment. In one embodiment, however, introspection and reflection may be used to map an object from a CIM environment into a Java™ environment. For example, rather than querying a particular CIM-specific class for all properties associated with the class, introspection may instead be used on an object to determine the properties associated with the object.

While the Java™ CIM object model has been described as being suitable for use in a Java™ environment such as the Solaris™ operating environment, it should be appreciated that the Java™ CIM object model may be suitable for use in other Java™ environments as well. That is, the Java™ CIM object model may be arranged to be used on substantially any Java™-enabled platform without departing from the spirit or the scope of the present invention. Therefore, the present examples are to be considered as illustrative and not restrictive, and the invention is not to be limited to the details given herein, but may be modified within the scope of the appended claims.

## Claims

1. A computer-implemented method for mapping a common information model (CIM) object into a platform-independent computing environment, the computer-implemented method comprising:
providing the platform-independent computing environment with a first class structure, the first class structure including a plurality of CIM-specific classes; and
providing the platform-independent computing environment with a capability to support an unsigned integer value.

2. A computer-implemented method as recited in claim 1 wherein the plurality of CIM-specific classes includes classes derived from a base class for managed system elements.

3. A computer-implemented method as recited in claim 1 wherein the plurality of CIM-specific classes includes a qualifier class, a qualifier type class, a flavor class, a scope class, a namespace class, a class which provides a CIM date and time representation, a property class, an object path class, and a value class.

4. A computer-implemented method as recited in claim 1 further including creating a CIM object in the platform-independent computing environment using the plurality of CIM-specific classes.

5. A computer-implemented method as recited in claim 4 wherein the CIM object in the platform-independent computing environment includes a property, the method further including obtaining the property from the CIM object in the platform-independent computing environment using a non-introspective operation.

6. A computer-implemented method as recited in claim 1 wherein the platform-independent computing environment is a Java™-based computing environment.

7. A platform-independent computing environment, the platform-independent computing environment comprising:
a processor; and
a mapping mechanism for mapping a common information model (CIM) object into an object model that is suitable for use in the platform-independent computing environment.

8. A platform-independent computing environment according to claim 7, wherein the platform-independent computing environment is a Java™-based environment, the platform-independent computing environment further including:
a capability to support an unsigned integer value.

9. A platform-independent computing environment according to claim 8 wherein the mapping mechanism includes representations of a plurality of CIM-specific classes.

10. A platform-independent computing environment according to claim 9 wherein the plurality of CIM-specific classes includes a qualifier class, a qualifier type class, a flavor class, a scope class, a namespace class, a class which provides a CIM date and time representation, a property class, an object path class, and a value class.

11. A computer program product for creating a common information model (CIM) object model that is arranged to be used within a platform-independent computing environment, the computer program product comprising:
computer code for providing the platform-independent computing environment with a first class structure, the first class structure including a plurality of CIM-specific classes;
computer code for providing the platform-independent computing environment with a capability to support an unsigned integer value; and
a computer-readable medium that contains the computer codes.

12. A computer program product as recited in claim 11 wherein the plurality of CIM-specific classes includes classes derived from a base class for managed system elements.

13. A computer program product as recited in claim 11 wherein the plurality of CIM-specific classes includes a qualifier class, a qualifier type class, a flavor class, a scope class, a namespace class, a class which provides a CIM date and time representation, a property class, an object path class, and a value class.

14. A computer program product as recited in claim 11 further including computer code for creating a CIM object in the platform-independent computing environment using the plurality of CIM-specific classes.

15. A computer program product as recited in claim 11 wherein the computer-readable medium is one selected from the group consisting of a floppy disk, a CD-ROM, a tape, an optical disk, a computer memory, and a data signal embodied in a carrier wave.

16. A class hierarchy within a Java™ computing environment, the class hierarchy including at least one class associated with a common information model (CIM) object model, the class hierarchy comprising:
an object class associated with the Java™ computing environment;
a class which is associated with managed system elements, wherein the class which is associated with the managed system elements is arranged to inherit from the object class;
a number class associated with the Java™ computing environment; and
at least one class which is associated with the implementation of unsigned integers, wherein the at least one class which is associated with the implementation of the unsigned integers is arranged to inherit from the number class.

17. A class hierarchy according to claim 16 further including:
a class which is associated with a CIM date and time representation, the class which is associated with the CIM date and time representation being arranged to inherit from the object class;
a class which is associated with a CIM data type representation, the class which is associated with the CIM data type representation being arranged to inherit from the object class;
at least one CIM-specific class which is arranged to inherit from the class which is associated with the managed system elements;
a class which is associated with a CIM flavor, the class which is associated with the CIM flavor being arranged to inherit from the object class;
a class which is associated with a CIM name space representation, the class which is associated with the CIM name space representation being arranged to inherit from the object class;
a class which is associated with a CIM object path representation, the class which is associated with the CIM object path representation being arranged to inherit from the object class;
a class which is associated with a CIM scope, the class which is associated with the CIM scope being arranged to inherit from the object class; and
a class which is associated with a CIM value, the class which is associated with the CIM value being arranged to inherit from the object class.
